# EUROPÄISCHE PATENTSCHRIFT

(11) **EP 3 452 223 B1**
(45) Veröffentlichungstag und Bekanntmachung des Hinweises auf die Patenterteilung: **03.06.2020**
(21) Anmeldenummer: 17748671.9
(22) Anmeldetag: 19.07.2017
(51) Int. Cl.: B01L 3/02, G01N 35/10, G01F 23/26, G01D 5/241

(54) **PIPETTIERVORRICHTUNG MIT EINEM FLÜSSIGKEITSVOLUMENSENSOR UND FLÜSSIGKEITSBEARBEITUNGSSYSTEM**
PIPETTING DEVICE COMPRISING A FLUID VOLUME SENSOR AND FLUID PROCESSING SYSTEM
DISPOSITIF DE PIPETTAGE POURVU D'UN CAPTEUR DE VOLUME DE LIQUIDE ET SYSTÈME DE TRAITEMENT DE LIQUIDE

(30) Priorität: 22.07.2016 CH 9502016
(43) Veröffentlichungstag der Anmeldung: 13.03.2019
(73) Patentinhaber: Tecan Trading AG, 8708 Männedorf (CH)
(72) Erfinder: OTT, Philipp, 8496 Steg im Tösstal (CH)
(74) Vertreter: OK pat AG
(86) Internationale Anmeldenummer: PCT/EP2017/068203
(87) Internationale Veröffentlichungsnummer: WO 2018/015421

(56) Entgegenhaltungen:
- EP-A1- 2 840 366
- JP-A- 2005 283 150
- US-A- 5 315 872
- US-A1- 2005 279 855
- US-A1- 2013 205 893

## Beschreibung

### TECHNISCHES GEBIET DER ERFINDUNG

Die vorliegende Erfindung bezieht sich auf das technische Gebiet der Flüssigkeitsbearbeitungssysteme und betrifft insbesondere Pipettiervorrichtungen zum Ansaugen (bzw. Aufnehmen / Aspirieren) und Abgeben (bzw. Zuführen / Dispensieren) von Flüssigkeitsvolumina, wie beispielsweise Flüssigkeitsproben, für automatisierte Laborgeräte bzw. Laboranlagen. Des Weiteren werden ein Verfahren zur Bestimmung eines bei einem Pipettiervorgang bearbeiteten (d.h. angesaugten bzw. abgegebenen) Flüssigkeitsvolumens vorgeschlagen sowie Verwendungen von diesem Verfahren angegeben.

### HINTERGRUND DER ERFINDUNG

Wenn in medizinischen, chemischen, analytischen oder pharmazeutischen Labors grosse Mengen an Proben zu untersuchen sind, werden dazu heute meist automatisierte Laborsysteme bzw. -anlagen eingesetzt, welche eine rasche und zuverlässige Verarbeitung jeder einzelnen Probe ermöglichen. Solche Laborsysteme sind oftmals als Flüssigkeitsbearbeitungssysteme auf die Handhabung von Flüssigkeitsvolumina ausgelegt, und dazu geeignet mit diesen Proben bestimmte Vorgänge auszuführen, wie beispielsweise optische Messungen, Pipettierungen, Waschen, Zentrifugieren, Inkubieren und Filtrieren. Dabei werden üblicherweise ein oder mehrere Roboter(-arme) für den vollautomatischen Betrieb solcher Laborsysteme eingesetzt. Diese Roboter sind insbesondere auf den Umgang mit Flüssigkeitsbehältern, wie beispielsweise Probenröhren oder Mikroplatten, in welchen sich die Flüssigkeitsproben befinden, spezialisiert. Solche Flüssigkeitsbearbeitungssysteme umfassen insbesondere Pipettierer sowohl zum Ansaugen und Abgeben von Flüssigkeiten oder Dispenser ausschliesslich zum Abgeben von Flüssigkeiten.

Die meisten Laboranwendungen erfordern sehr präzise Pipettieroperationen um eine zufriedenstellende analytische Genauigkeit zu erhalten. Folglich ist eine genaue Kenntnis der verarbeiteten Probenmengen bzw. Flüssigkeitsvolumina von entscheidender Bedeutung. Bei bislang bekannten Systemen wird dies meist indirekt bestimmt, beispielsweise indem die Probe mit einer bekannten Ansaugleistung während einer bestimmten Zeit aufgenommen wird. Das Problem mit diesen indirekten Verfahren der Volumenbestimmung ist, dass nicht gewährleistet werden kann, dass tatsächlich die gewünschte Probenmenge aufgenommen (respektive abgegeben) wurde, da beispielsweise (zum Teil) Luft anstatt der Probenflüssigkeit angesaugt wird oder gar keine Flüssigkeit aufgenommen wird, weil die Pipettenspitze verstopft ist.

Ebenso hängt das effektiv aufgenommene Volumen von der Viskosität und der Oberflächenspannung der Probe ab. Weitere Parameter wie z.B. Variationen im Durchmesser der Öffnung von Wegwerf-Pipettenspitzen beeinflussen ebenfalls das effektiv aufgenommene Probenvolumen.

Bekannte Verfahren der kapazitiven Flüssigkeitspegeldetektion (sog. "capacitive liquid level detection", cLLD) können dazu verwendet werden, um die Pegelhöhendifferenz zwischen dem Eintauchen in und dem Austauchen aus einer Probenflüssigkeit zu bestimmen. Aus der Pegelhöhendifferenz und der Querschnittsfläche des Gefässes kann das aufgenommene oder abgegebene Volumen berechnet werden. Diese Verfahren sind allerdings für kleine Volumina und grosse Querschnittsflächen zu ungenau. Sie eignen sich daher nur für grosse Volumina. Zusätzlich verfälschen mechanische Toleranzen der Höhenzustellung der kapazitiven Messfühler die Messung der Pegelhöhendifferenz.

Weiter gibt es auch Verfahren die den Druck oder die Flussrate eines Arbeitsfluids (Flüssigkeit oder Gas, meist Luft) während dem Aspirieren oder Dispensieren überwachen. Dies sind aber sehr aufwendige Verfahren, und es kann zudem nur dynamisch gemessen werden, d.h. das bearbeitete Probenvolumen wird aus einem Druckverlauf respektive einem Verlauf der Flussrate ermittelt.

Die Dokumente US 2005/0279855 A1 und JP 2005283150 offenbaren eine Pipettiervorrichtung mit einem Messkondensator zur Bestimmung des Flüssigkeitsniveaus in der Pipettierspitze, wobei zwei Elektroden auf gegenüberliegenden Seiten der Pipettierspitze sowie die Flüssigkeit in der Pipettierspitze den Messkondensator bilden. Die Dokumente EP 2 840 366 A1, US 2013/0205893 A1 und US 5,315,872 offenbaren ebenfalls Systeme zur Bestimmung eines Flüssigkeitsniveaus in einem Behälter (wie z.B. ein Wassertank) mit einem Messkondensator, wobei dieser durch eine Elektrode an einer Aussenseite des Behälters und eine leitende Flüssigkeit im Behälter als zweite Elektrode gebildet wird.

Es besteht daher der Bedarf nach Mitteln, welche eine einfache (und folglich kostengünstige) sowie präzise Bestimmung der verarbeiteten Probenmengen bzw. Flüssigkeitsvolumina in automatisierten Flüssigkeitsbearbeitungssystemen erlauben und somit eine hohe analytische Genauigkeit der durchgeführten Untersuchungen bzw. Operationen gewährleisten.

### ZUSAMMENFASSUNG DER ERFINDUNG

Es ist eine Aufgabe der vorliegenden Erfindung eine Pipettiervorrichtung bereitzustellen, mit deren Hilfe eine präzise Bestimmung der verarbeiteten Probenmengen bzw. Flüssigkeitsvolumina ermöglicht wird. Diese Aufgabe wird erfindungsgemäss durch die in Anspruch 1 festgelegte Pipettiervorrichtung erfüllt.

Es ist zudem eine Aufgabe der vorliegenden Erfindung ein Flüssigkeitsbearbeitungssystem mit der vorgeschlagenen Pipettiervorrichtung auszustatten, um eine für Laborsysteme bzw. -anlagen geeignete Einrichtung bereitzustellen. Diese Aufgabe wird erfindungsgemäss durch das Flüssigkeitsbearbeitungssystem gemäss Anspruch 11 gelöst.

Es ist eine weitere Aufgabe der vorliegenden Erfindung ein Verfahren bereitzustellen, welches eine genaue Bestimmung eines bearbeiteten (d.h. aspirierten bzw. dispensierten) Flüssigkeitsvolumens beim Pipettieren ermöglicht. Diese Aufgabe wird erfindungsgemäss durch das in Anspruch 16 vorgeschlagene Verfahren gelöst.

Es ist ferner eine Aufgabe der vorliegenden Erfindung Verwendungen des vorgeschlagenen Verfahrens anzugeben. Solche erfindungsgemässen Verwendungen werden in den Ansprüchen 17 und 18 aufgeführt.

Spezifische erfindungsgemässe Ausführungsvarianten werden in den abhängigen Ansprüchen angegeben.

Eine erfindungsgemässe Pipettiervorrichtung umfasst eine Röhre, welche an einem Ende eine Öffnung zum Ansaugen bzw. Abgeben einer Probenflüssigkeit aufweist (im Folgenden auch Pipettieröffnung genannt), und die am anderen Ende mit einem Druckerzeugungsmittel, wie beispielsweise einem Druckreservoir, einer Pumpe, einem Kolben oder einem Stössel, wirkverbindbar ist, wobei an der Pipettiervorrichtung eine erste Elektrode ausgebildet ist, welche zusammen mit einer zweiten Elektrode, die durch mindestens einen Teil der in der Röhre aufnehmbaren Probenflüssigkeit gebildet wird, einen Messkondensator bildet, welcher mit einer Messeinheit wirkverbunden ist, welche ausgebildet ist, um in Abhängigkeit der Kapazität des Messkondensators ein Volumen der angesaugten bzw. abgegebenen Probenflüssigkeit zu bestimmen.

Die Kernidee der vorliegenden Erfindung liegt demnach darin, die Probenflüssigkeit als eine der beiden Elektroden eines Messkondensators zu verwenden, d.h. die Probenflüssigkeit wirkt als "Flüssigelektrode". Je nach Menge der von der Pipettiervorrichtung angesaugten respektive abgegebenen Probenflüssigkeit ändert sich die Kapazität dieses Messkondensators (d.h. sie wird grösser respektive kleiner), wodurch mittels der Messeinheit direkt das Volumen der angesaugten respektive abgegebenen Probenflüssigkeit genau bestimmt werden kann. Dazu muss die Probenflüssigkeit allerdings über eine gewisse Leitfähigkeit verfügen. Dabei wirkt die Röhre als Dielektrikum zwischen den beiden Elektroden. Durch eine entsprechende Ausgestaltung der Röhre in deren Innerem sich die Probenflüssigkeit als zweite Elektrode befindet, und z.B. an deren äusseren Oberfläche die erste Elektrode aufgebracht ist, können auch sehr kleine Volumen mit einer hohen Genauigkeit bestimmt werden. Die beiden Elektroden des Messkondensators können dabei eine beliebige Form haben. Es muss lediglich vorweg der genaue Zusammenhang zwischen der Kapazität des Messkondensators in Abhängigkeit des Probenvolumens ermittelt werden.

Unter dem Begriff Probenvolumen wird nicht nur das Volumen von flüssigen Analyseproben verstanden, sondern ebenfalls Volumina von Reagenzien, Verdünnungslösungen wie Pufferlösungen, Lösungsmittel oder auch von Suspensionen mit Partikeln oder Zellen.

In der Messeinheit kann beispielsweise ein Kapazitäts-Digital-Wandler ("Capacitance-to-Digital Converter", CDC) eingesetzt werden. Ein CDC ist ein Wandler, der Kapazitäten in Spannungen wandelt und auf dem Verfahren des Sigma-Delta-Wandlers basiert. Beim CDC-Verfahren wird für eine unbekannte Kapazität deren Grösse in Farad als Digitalwert bestimmt. Beispiele von im Handel erhältlichen CDC Bausteinen sind der FDC1004 von Texas Instruments sowie der AD7745 von Analog Devices.

In einer Ausführungsvariante umfasst die Pipettiervorrichtung das Druckerzeugungsmittel, wie beispielsweise eine Pumpe, ein Kolben oder ein Stössel.

In einer weiteren Ausführungsvariante umfasst die Pipettiervorrichtung ein Druckreservoir als Druckerzeugungsmittel, welches über ein Ventil fluidisch mit der Röhre verbunden ist.

In einer weiteren Ausführungsvariante umfasst die Pipettiervorrichtung ein Überdruckreservoir und ein Unterdruckreservoir als Druckerzeugungsmittel, welche über Ventile jeweils fluidisch mit der Röhre verbunden sind.

In einer weiteren Ausführungsvariante weist die Pipettiervorrichtung einen elektrischen Kontakt auf, welcher von der ersten Elektrode elektrisch isoliert und derart ausgebildet ist, dass beim Ansaugen oder Abgeben der Probenflüssigkeit eine elektrische Verbindung mit der Probenflüssigkeit herstellbar ist, sodass mindestens ein Teil der Probenflüssigkeit, welche sich in der Röhre befindet, die zweite Elektrode des Messkondensators bildet, wobei die erste Elektrode und der elektrische Kontakt für die zweite Elektrode mit der Messeinheit elektrisch verbunden sind.

In einer weiteren Ausführungsvariante der Pipettiervorrichtung ist das Ende mit der Öffnung zum Ansaugen bzw. Abgeben der Probenflüssigkeit als Pipettenspitze ausgeführt, wobei diese einteilig mit der Röhre geformt oder mit der Röhre lösbar verbunden bzw. verbindbar ist, und wobei die Pipettenspitze insbesondere gegen die Öffnung hin verjüngt ist bzw. eine konische Form aufweist. Die Pipettenspitze kann beispielsweise eine Stahlnadel oder Kanüle sein, welche für den wiederholten Gebrauch geeignet ist, oder sie kann als Wegwerfspitze (bzw. -tip), welche nur für den einmaligen Gebrauch konzipiert ist, ausgeführt sein und z.B. aus Kunststoff bestehen.

In einer weiteren Ausführungsvariante der Pipettiervorrichtung umhüllt die erste Elektrode die Röhre, insbesondere die Pipettenspitze, teilweise oder vollständig.

In einer weiteren Ausführungsvariante der Pipettiervorrichtung wird die erste Elektrode durch einen Draht gebildet, welcher in Längsrichtung entlang der Röhre angeordnet ist, insbesondere im Bereich der Öffnung bzw. der Pipettenspitze.

In einer weiteren Ausführungsvariante der Pipettiervorrichtung besteht die Pipettenspitze aus einem nichtleitenden Material, welches als Dielektrikum des Messkondensators dient.

In einer weiteren Ausführungsvariante der Pipettiervorrichtung besteht die Pipettenspitze aus einem leitenden Material und bildet den elektrischen Kontakt.

In einer weiteren Ausführungsvariante der Pipettiervorrichtung befindet sich der elektrische Kontakt bei der Öffnung der Pipettenspitze.

In einer weiteren Ausführungsvariante der Pipettiervorrichtung ist der elektrische Kontakt über eine kapazitive Kopplung via die Probenflüssigkeit erstellbar, welche sich in einem Probenbehälter befindet, aus dem Probenflüssigkeit angesaugt bzw. in den Probenflüssigkeit abgegeben wird.

In einer weiteren Ausführungsvariante der Pipettiervorrichtung befindet sich der elektrische Kontakt an einer Kanalwand der Röhre, insbesondere wird er durch die Kanalwand gebildet, wobei die Kanalwand mindestens zum Teil mit einem elektrisch leitfähigen Material beschichtet ist oder aus einem elektrisch leitfähigen Material besteht.

In einer weiteren Ausführungsvariante der Pipettiervorrichtung ist die erste Elektrode mit einer Isolation, insbesondere einer elektrisch isolierenden Schicht, bedeckt.

Gemäss einem weiteren Aspekt der vorliegenden Erfindung umfasst ein Flüssigkeitsbearbeitungssystem eine vorgeschlagene Pipettiervorrichtung mit einem Druckerzeugungsmittel, wie beispielsweise einem Druckreservoir, einer Pumpe, einem Kolben oder einem Stössel, wobei das Druckerzeugungsmittel mit einem Regler verbunden ist, welcher ausgebildet ist, um in einem geschlossenen Regelkreis basierend auf dem von der Messeinheit bestimmten Volumen der angesaugten bzw. abgegebenen Probenflüssigkeit sowie eines vorgegebenen Zielvolumens der angesaugten bzw. abgegebenen Probenflüssigkeit, einen Druck für das Ansaugen bzw. Abgegeben der Probenflüssigkeit zu erzeugen.

In einer Ausführungsvariante umfasst das Flüssigkeitsbearbeitungssystem ein Druckreservoir als Druckerzeugungsmittel, wobei das Druckreservoir über ein Ventil fluidisch mit der Röhre verbunden ist, und das Ventil mit dem Regler verbunden ist.

In einer Ausführungsvariante umfasst das Flüssigkeitsbearbeitungssystem ferner einen Arbeitstisch für die Anordnung von Flüssigkeitsbehältern, wie beispielsweise Probenröhrchen oder Mikroplatten.

In einer Ausführungsvariante umfasst das Flüssigkeitsbearbeitungssystem weiter eine motorisierte Transporteinheit, wie beispielsweise ein Roboterarm, auf welcher die Pipettiervorrichtung angeordnet ist, wobei der Regler zusätzlich dazu ausgebildet ist, Signale an die Transporteinheit zu senden, um die Pipettiervorrichtung so zu bewegen, dass die Öffnung der Pipettenspitze genau positionierbar ist, insbesondere in einem mit der Probenflüssigkeit gefüllten Flüssigkeitsbehälter, wie beispielsweise einem Probenröhrchen oder einer Mikroplatte.

In einer weiteren Ausführungsvariante umfasst das Flüssigkeitsbearbeitungssystem ein Fluidraum, welcher sich vom Druckerzeugungsmittel bis in die Röhre hinein erstreckt und mit einer System- bzw. Arbeitsflüssigkeit gefüllt ist, welche auf dem Referenzpotential liegt, insbesondere mit Masse verbunden ist. Die System- bzw. Arbeitsflüssigkeit dient zur Druckübertragung vom Druckerzeugungsmittel in die Röhre ("liquid displacement pipetting" - im Gegensatz zum Luftpolsterpipettieren "air displacement pipetting").

In einer weiteren Ausführungsvariante des Flüssigkeitsbearbeitungssystems liegt die erste Elektrode auf einem Referenzpotential, insbesondere ist sie mit Masse verbunden. Bei dieser Ausführungsvariante wird ebenfalls eine System- bzw. Arbeitsflüssigkeit zur Druckübertragung eingesetzt.

In einer weiteren Ausführungsvariante des Flüssigkeitsbearbeitungssystems liegt die zweite Elektrode auf einem Referenzpotential, insbesondere ist die zweite Elektrode kapazitiv mit Masse gekoppelt, beispielsweise via die Probenflüssigkeit, welche sich in einem Probenbehälter befindet, aus dem Probenflüssigkeit angesaugt bzw. in den Probenflüssigkeit abgegeben wird.

Gemäss einem weiteren Aspekt der vorliegenden Erfindung umfasst ein Verfahren zur Bestimmung eines bearbeiteten Flüssigkeitsvolumens beim Pipettieren mit einer vorgeschlagenen Pipettiervorrichtung folgende Schritte:
- Bestimmen eines ersten Volumens der Probenflüssigkeit, welche sich in der Pipettiervorrichtung befindet, in Abhängigkeit der Kapazität des Kondensators umfassend die erste und zweite Elektrode, wobei die zweite Elektrode durch einen Teil der Probenflüssigkeit, welche sich in der Pipettenspitze bzw. der Röhre befindet, gebildet wird, wobei dieses erste Volumen null sein kann;
- Ansaugen bzw. Abgeben von Probenflüssigkeit durch Erzeugung eines (Unter- oder Über-)Drucks in der Röhre;
- Bestimmen eines zweiten Volumens der Probenflüssigkeit, welche sich zu einem zweiten Zeitpunkt in der Pipettiervorrichtung befindet, in Abhängigkeit der Kapazität des Kondensators umfassend die erste und zweite Elektrode, wobei die zweite Elektrode durch einen Teil der Probenflüssigkeit, welche sich zum zweiten Zeitpunkt in der Pipettenspitze bzw. der Röhre befindet, gebildet wird, wobei dieses zweite Volumen null sein kann;
- Bestimmen des zwischen dem ersten und dem zweiten Zeitpunkt bearbeiteten Flüssigkeitsvolumens, d.h. des ansaugten bzw. des abgegebenen Volumens der Probenflüssigkeit, als Differenz zwischen dem ersten und dem zweiten Volumen.

Gemäss einem weiteren Aspekt der vorliegenden Erfindung ist die Verwendung des vorgeschlagenen Verfahrens zum Bestimmen von mindestens einem der folgenden Sachverhalte basierend auf einem zeitlichen Verlauf abhängig von der bestimmten Kapazität und einem zeitlichen Verlauf des erzeugten Drucks vorgesehen:
- ob die Öffnung der Röhre bzw. der Pipettenspitze zumindest teilweise verstopft ist;
- ob die Probenflüssigkeit Gasblasen, insbesondere Luftblasen, enthält, insbesondere ob die angesaugte bzw. abgegebene Probenflüssigkeit schaumig ist;
- ob mindestens teilweise Luft anstatt Probenflüssigkeit angesaugt wurde.

Des Weiteren ist erfindungsgemäss die Verwendung des vorgeschlagenen Verfahrens zur Ermittlung in Abhängigkeit von der bestimmten Kapazität, ob ein intakter Luftspalt zwischen einer System- bzw. Arbeitsflüssigkeit und der Probenflüssigkeit in der Röhre vorliegt, vorgesehen.

### KURZE BESCHREIBUNG DER ZEICHNUNGEN

Nichtlimitierende Ausführungsbeispiele der vorliegenden Erfindung werden nachstehend anhand von Figuren noch näher erläutert. Es zeigen:
- Fig. 1: eine schematische Darstellung eines Ausführungsbeispiels einer erfindungsgemässen Pipettiervorrichtung;
- Fig. 2: eine perspektivische Ansicht eines weiteren Ausführungsbeispiels einer erfindungsgemässen Pipettiervorrichtung, welche mit einer Arbeitsflüssigkeit betrieben wird;
- Fig. 3: eine weitere schematische Darstellung des Ausführungsbeispiels einer erfindungsgemässen Pipettiervorrichtung gemäss Fig. 2;
- Fig. 4: a) eine perspektivische Ansicht eines weiteren Ausführungsbeispiels einer erfindungsgemässen Pipettiervorrichtung,
b) eine Detailansicht des Ausführungsbeispiels der erfindungsgemässen Pipettiervorrichtung nach Fig. 4 a) ;
- Fig. 5: eine perspektivische Ansicht einer Pipettierspitze eines Ausführungsbeispiels einer erfindungsgemässen Pipettiervorrichtung;
- Fig. 6: eine perspektivische Ansicht einer Pipettierspitze eines weiteren Ausführungsbeispiels einer erfindungsgemässen Pipettiervorrichtung; und
- Fig. 7: einen zeitlichen Verlauf der gemessenen Kapazität des Messkondensators beim dreimaligen Ansaugen und Abgeben einer Probenflüssigkeit mittels einer erfindungsgemässen Pipettiervorrichtung gemäss Fig. 6.

In den Figuren stehen gleiche Bezugszeichen für gleiche Elemente.

### DETAILLIERTE BESCHREIBUNG DER ERFINDUNG

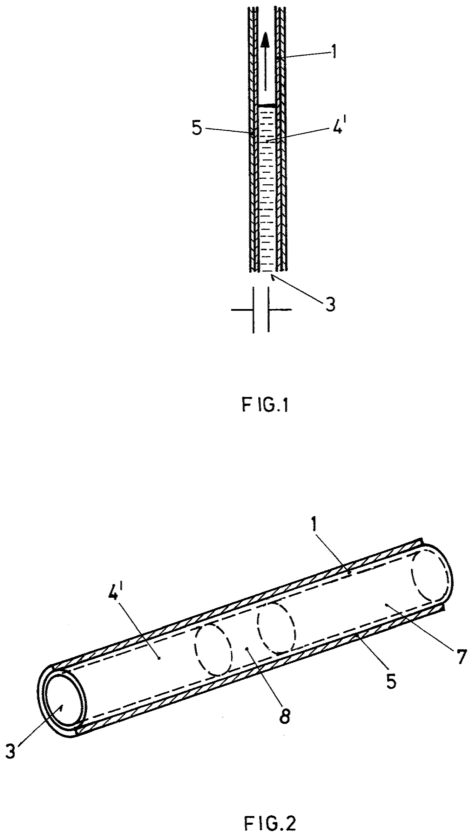

Fig. 1 zeigt stark vereinfacht in einer schematischen Darstellung ein Ausführungsbeispiel einer erfindungsgemässen Pipettiervorrichtung, um die Kernidee der vorliegenden Erfindung zu erläutern. Die Pipettiervorrichtung besteht aus einer Röhre 1, welche beispielsweise aus Glas oder einem Kunststoff besteht. In den Kanal dieser Röhre 1 wird durch eine Öffnung 3 am einen Ende der Röhre 1 eine Probenflüssigkeit 4' aus einem Probenbehälter in die Röhre 1 angesaugt bzw. aus dieser abgegeben indem z.B. mittels einer Pumpe, einem Kolben oder Stössel, welche(r) mit dem anderen Ende der Röhre 1 in Fluidverbindung steht, der Druck in der Röhre 1 reduziert bzw. erhöht wird. Um die Röhre 1 herum ist eine erste Elektrode 5 ganz oder teilweise flächig umhüllend angeordnet. Diese erste Elektrode 5 kann beispielsweise aus einer auf die Röhre 1 aufgedampften Kupferschicht oder einer auf der Röhre 1 aufgeklebte Kupferfolie bestehen. Diese erste Elektrode 5 wird auf ein bestimmtes Referenzpotential gelegt, wie z.B. mit Masse verbunden. Wird nun die Probenflüssigkeit 4' via einen elektrischen Kontakt mittels einer Spannungsquelle auf ein anderes Potential gelegt, so bilden die erste Elektrode 5 und die Probenflüssigkeit 4' als Gegenelektrode (= zweite Elektrode) zusammen einen (Mess-)Kondensator, welcher je nach dem Volumen der Probenflüssigkeit 4', die sich gerade in der Röhre 1 befindet, eine unterschiedlich grosse Kapazität aufweist. Somit besteht ein direkter Zusammenhang zwischen der Kapazität dieses Messkondensators und dem Volumen der Probenflüssigkeit 4', welche sich in der Röhre 1 befindet, d.h. beim Ansaugen (bzw. Aspirieren) von Probenflüssigkeit erhöht sich die Kapazität und beim Abgeben (bzw. Dispensieren) von Probenflüssigkeit verkleinert sich die Kapazität. Durch Bestimmung der Kapazität des Messkondensators mittels einer geeigneten Messeinheit, welche z.B. einen Kapazitäts-Digital-Wandler (sog. CDC Wandler) umfasst, kann somit direkt das Volumen der in der Röhre 1 befindlichen Probenflüssigkeit 4' ermittelt werden.

Fig. 2 zeigt den Fall, wo eine Arbeitsflüssigkeit 7 (auch Systemflüssigkeit genannt) zur Druckübertragung eingesetzt wird. Dabei ist die Röhre 1 teilweise mit der Arbeitsflüssigkeit 7 und teils mit der Probenflüssigkeit 4' gefüllt, wobei sich zwischen den beiden ein Luftspalt 8 befindet, welcher verhindert, dass die Arbeitsflüssigkeit 7 mit der Probenflüssigkeit 4' in Berührung kommt. Dabei wird die Arbeitsflüssigkeit 7 ebenfalls auf das Referenzpotential der ersten Elektrode 5 gelegt, also z.B. mit Masse verbunden. In den beiden Ausführungsformen gemäss den Figuren 1 und 2 kann der elektrische Kontakt für die Probenflüssigkeit 4' beispielsweise an der Kanalwand der Röhre 1 ausgebildet sein.

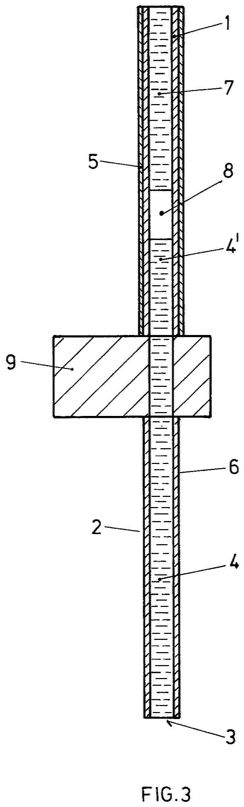

Fig. 3 zeigt eine Anordnung, wo an die Röhre 1 eine Pipettenspitze 2 angebracht ist, wobei die erste Elektrode 5 wiederum die Röhre 1 umhüllt und der elektrische Kontakt 6 durch die Pipettenspitze 2 gebildet wird, welche beispielsweise aus Metall oder einem leitenden Kunststoff besteht. Die Pipettenspitze 2 kann dabei z.B. als Kanüle ausgeführt sein. Zwischen der Röhre 1 und der Pipettenspitze 2 ist in dieser Ausführungsvariante der Pipettiervorrichtung eine Messeinheit 9 zur Ermittlung der Kapazität des Messkondensators und damit des Volumens der Probenflüssigkeit 4' in der Röhre 1 angeordnet, sodass diese direkt in der Pipettiervorrichtung integriert ist. Bei der Ausführungsvariante gemäss Fig. 3 wird vorzugsweise eine Arbeitsflüssigkeit 7 (wie in Fig. 2 dargestellt) eingesetzt.

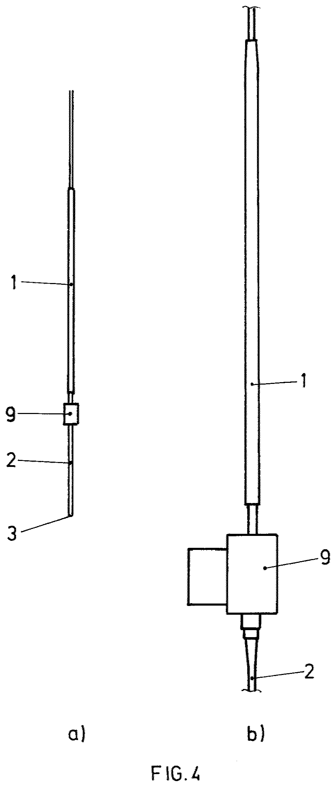

Die Figuren 4 a) & b) zeigen Abbildungen eines Versuchsaufbaus einer Pipettiervorrichtung gemäss Fig. 3, welcher dazu verwendet wurde, um die praktische Funktionstauglichkeit der vorliegenden Erfindung zu verifizieren.

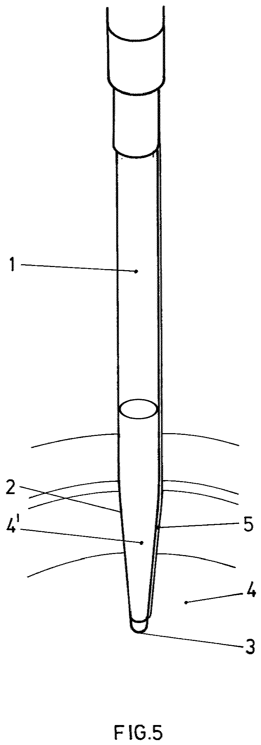

Fig. 5 zeigt eine weitere Ausführungsvariante der erfindungsgemässen Pipettiervorrichtung, wobei hier an der Röhre 1 das eine Ende als Pipettenspitze 2 ausgebildet ist. Diese Art von Pipettenspitzen 2 ist meist aus Kunststoff gefertigt und zum einmaligen Gebrauch vorgesehen, d.h. als Wegwerfspitze bzw. -tip ausgeführt. Dabei wird ein isolierter Kupferdraht, welcher in Längsrichtung entlang der Röhre 1 angeordnet ist, als erste Elektrode 5 eingesetzt. Die Isolation des Kupferdrahtes sorgt dafür, dass beim Eintauchen der Pipettenspitzen 2 in die Probenflüssigkeit 4 keine elektrische Verbindung mit der Probenflüssigkeit 4 zustande kommt. Bei dieser Ausführungsvariante wird die Masse bevorzugt kapazitiv über den Boden des Probenbehälters, in welchem sich die Probenflüssigkeit 4 befindet, mit der Probenflüssigkeit 4 gekoppelt. Der Arbeitstisch, auf dem der Probenbehälter in einem Probenbehälterträger angeordnet ist, wird dazu mit Masse als Referenzpotential verbunden. Die in Serie geschaltete Koppelkapazität ist dabei viel grösser als die Messkapazität. Alternativ könnte die Probenflüssigkeit 4', welche die zweite Elektrode 4' bildet, z.B. mittels eines nicht isolierten zweiten Kupferdrahtes, welcher als elektrischer Kontakt dient, mit der Messeinheit verbunden sein, oder die Pipettenspitzen 2 könnte aus leitenden Kunststoff bestehen und den elektrischer Kontakt bilden. Anstatt als Draht könnte die erste Elektrode 5 durch eine geeignete Beschichtung oder Umhüllung der Pipettenspitze 2 gebildet werden. So könnte die erste Elektrode 5 durch eine leitende Beschichtung der äusseren Oberfläche der Pipettenspitzen 2 oder durch eine aufgeklebte leitende Folie gebildet werden. Die Beschichtung bzw. Folie für die erste Elektrode 5 müsste dann auf den Bereich der Pipettenspitzen 2 begrenzt sein, welcher nicht in die Probenflüssigkeit 4 eingetaucht wird, oder diese Beschichtung müssten in diesem Bereich mit einer zusätzlichen Isolationssicht abgedeckt sein.

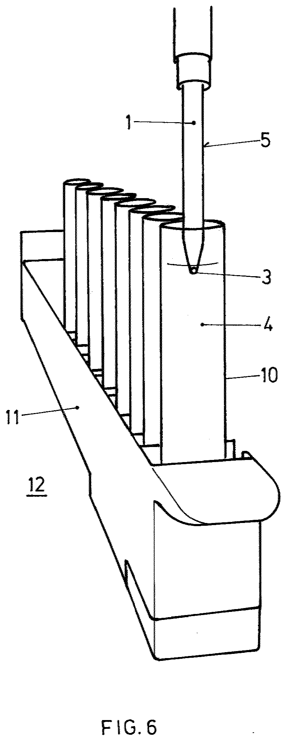

Fig. 6 zeigt eine weitere Ausführungsvariante einer Pipettiervorrichtung, bei welcher auf der Pipettenspitze 2 eine umhüllende Kupferfolie als erste Elektrode 5 eingesetzt wird. Die Probenflüssigkeit 4 befindet sich in einer Probenröhre 10 als Probenbehälter, welche zusammen mit weiteren Probenröhren 10 in einem Probenbehälterträger 11 angeordnet ist, der auf einem Arbeitstisch 12 steht. Die leitende Arbeitstischoberfläche ist mit Masse verbunden, wobei die Probenflüssigkeit 4, welche kapazitiv mit dem Arbeitstisch 12 gekoppelt ist, ebenfalls auf Masse liegt.

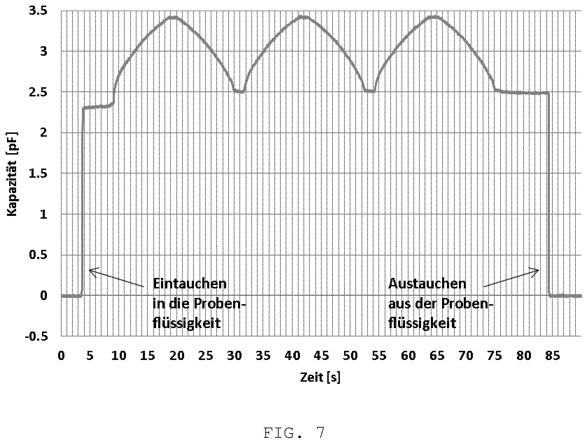

Fig. 7 zeigt den zeitlichen Verlauf der gemessenen Kapazität des Messkondensators beim dreimaligen Ansaugen und Abgeben einer Probenflüssigkeit mittels der Pipettiervorrichtung gemäss Fig. 6. Deutlich zu erkennen sind die beiden Kapazitätssprünge beim Eintauchen der Pipettenspitzen in die Probenflüssigkeit am Anfang und beim Heraustauchen am Schluss. Dazwischen liegen drei Zyklen während denen jeweils 55 µl einer Salzlösung als Probenflüssigkeit mit einer konstanten Rate von 5 µl/s angesaugt und wieder abgegebene werden. Die Kurvenform beim Ansaugen und Abgeben ergibt sich aus der konischen Geometrie der Pipettenspitze.

### LISTE DER BEZUGSZEICHEN

- 1: Röhre
- 2: Pipettenspitze
- 3: Öffnung in der Pipettenspitze, Pipettieröffnung
- 4: Probenflüssigkeit im Probenbehälter
- 4': Probenflüssigkeit in der Röhre = zweite, variable Elektrode ("Flüssigelektrode") des Messkondensators
- 5: erste, fixe Elektrode des Messkondensators
- 6: elektrischer Kontakt für die zweite Elektrode des Messkondensators
- 7: Arbeits- bzw. Systemflüssigkeit
- 8: Luftspalt
- 9: Messeinheit
- 10: Probenbehälter, z.B. Probenröhre
- 11: Probenbehälterträger
- 12: Arbeitstisch

## Patentansprüche

1. Pipettiervorrichtung mit einer Röhre (1), welche an einem Ende eine Öffnung (3) zum Ansaugen bzw. Abgeben einer Probenflüssigkeit (4) aufweist, und die am anderen Ende mit einem Druckerzeugungsmittel wirkverbindbar ist, wobei an der Pipettiervorrichtung eine erste Elektrode (5) ausgebildet ist, welche zusammen mit einer zweiten Elektrode (4') einen Messkondensator bildet, welcher mit einer Messeinheit (9) wirkverbunden ist, welche ausgebildet ist, um in Abhängigkeit der Kapazität des Messkondensators ein Volumen der angesaugten bzw. abgegebenen Probenflüssigkeit (4) zu bestimmen, **dadurch gekennzeichnet, dass** die zweite Elektrode (4') durch mindestens einen Teil der in der Röhre (1) aufnehmbaren Probenflüssigkeit (4') gebildet wird.

2. Pipettiervorrichtung nach Anspruch 1 mit einem elektrischen Kontakt (6), welcher von der ersten Elektrode (5) elektrisch isoliert und derart ausgebildet ist, dass beim Ansaugen oder Abgeben der Probenflüssigkeit (4) eine elektrische Verbindung mit der Probenflüssigkeit (4) herstellbar ist, sodass mindestens ein Teil der Probenflüssigkeit (4'), welche sich in der Röhre (1) befindet, die zweite Elektrode (4') des Messkondensators bildet, wobei die erste Elektrode und der elektrische Kontakt für die zweite Elektrode (4') mit der Messeinheit (9) elektrisch verbunden sind.

3. Pipettiervorrichtung nach Anspruch 1 oder 2, wobei das Ende mit der Öffnung (3) zum Ansaugen bzw. Abgeben der Probenflüssigkeit (4) als Pipettenspitze (2) ausgeführt ist, wobei diese einteilig mit der Röhre (1) geformt oder mit der Röhre (1) lösbar verbunden ist, und wobei die Pipettenspitze (2) insbesondere gegen die Öffnung (3) hin verjüngt ist bzw. eine konische Form aufweist.

4. Pipettiervorrichtung nach einem der Ansprüche 1 bis 3, wobei die erste Elektrode (5) die Röhre (1), insbesondere die Pipettenspitze (2), teilweise oder vollständig umhüllt.

5. Pipettiervorrichtung nach einem der Ansprüche 1 bis 4, wobei die erste Elektrode (5) durch einen Draht gebildet wird, welcher in Längsrichtung entlang der Röhre (1) angeordnet ist, insbesondere im Bereich der Öffnung (3) bzw. der Pipettenspitze (2).

6. Pipettiervorrichtung nach einem der Ansprüche 2 bis 5, wobei die Pipettenspitze (2) aus einem leitenden Material besteht und den elektrischen Kontakt (6) bildet, oder alternativ aus einem nichtleitenden Material besteht, welches als Dielektrikum des Messkondensators dient.

7. Pipettiervorrichtung nach einem der Ansprüche 2 bis 6, wobei der elektrische Kontakt (6) sich bei der Öffnung (3) der Pipettenspitze (2) befindet.

8. Pipettiervorrichtung nach einem der Ansprüche 2 bis 6, wobei der elektrische Kontakt (6) über eine kapazitive Kopplung via die Probenflüssigkeit (4) erstellbar ist, welche sich in einem Probenbehälter (10) befindet, aus dem Probenflüssigkeit (4) angesaugt bzw. in den Probenflüssigkeit (4) abgegeben wird.

9. Pipettiervorrichtung nach einem der Ansprüche 2 bis 8, wobei der elektrische Kontakt (6) sich an einer Kanalwand der Röhre (1) befindet, insbesondere wird er durch die Kanalwand gebildet, wobei die Kanalwand mindestens zum Teil mit einem elektrisch leitfähigen Material beschichtet ist oder aus einem elektrisch leitfähigen Material besteht.

10. Pipettiervorrichtung nach einem der Ansprüche 1 bis 9, wobei die erste Elektrode (5) mit einer Isolation, insbesondere einer elektrisch isolierenden Schicht, bedeckt ist.

11. Flüssigkeitsbearbeitungssystem umfassend eine Pipettiervorrichtung nach einem der Ansprüche 1 bis 10 und ein Druckerzeugungsmittel, wobei das Druckerzeugungsmittel mit einem Regler verbunden ist, welcher ausgebildet ist, um in einem geschlossenen Regelkreis basierend auf dem von der Messeinheit (9) bestimmten Volumen der angesaugten bzw. abgegebenen Probenflüssigkeit (4') sowie eines vorgegebenen Zielvolumens der angesaugten bzw. abgegebenen Probenflüssigkeit (4'), einen Druck für das Ansaugen bzw. Abgegeben der Probenflüssigkeit (4) zu erzeugen.

12. Flüssigkeitsbearbeitungssystem nach Anspruch 11, weiter umfassend eine motorisierte Transporteinheit, wie beispielsweise einen Roboterarm, auf welcher die Pipettiervorrichtung angeordnet ist, wobei der Regler zusätzlich dazu ausgebildet ist, Signale an Transporteinheit zu senden, um die Pipettenspitze (2) der Pipettiervorrichtung so zu bewegen, dass die Öffnung (3) der Pipettenspitze (2) genau positionierbar ist, insbesondere in einem mit der Probenflüssigkeit (4) gefüllten Flüssigkeitsbehälter (10), wie beispielsweise einem Probenröhrchen (10) oder einer Mikroplatte.

13. Flüssigkeitsbearbeitungssystem nach Anspruch 11 oder 12, wobei ein Fluidraum, welcher sich vom Druckerzeugungsmittel bis in die Röhre (1) hinein erstreckt, mit einer Arbeitsflüssigkeit (7) gefüllt ist, welche auf dem Referenzpotential liegt, insbesondere mit Masse verbunden ist.

14. Flüssigkeitsbearbeitungssystem nach Anspruch 13, wobei die erste Elektrode (5) auf einem Referenzpotential liegt, insbesondere mit Masse verbunden ist.

15. Flüssigkeitsbearbeitungssystems nach Anspruch 11 oder 12, wobei die zweite Elektrode (4') auf einem Referenzpotential liegt, insbesondere ist die zweite Elektrode (4') kapazitiv mit Masse gekoppelt, beispielsweise via die Probenflüssigkeit (4), welche sich in einem Probenbehälter (10) befindet, aus dem Probenflüssigkeit (4) angesaugt bzw. in den Probenflüssigkeit (4) abgegeben wird.

16. Verfahren zur Bestimmung eines bearbeiteten Flüssigkeitsvolumens beim Pipettieren mit einer Pipettiervorrichtung nach einem der Ansprüche 1 bis 10, umfassend die Schritte:
- Bestimmen eines ersten Volumens der Probenflüssigkeit (4'), welche sich in der Pipettiervorrichtung befindet, in Abhängigkeit der Kapazität des Messkondensators umfassend die erste und zweite Elektrode (4', 5), wobei die zweite Elektrode (4') durch einen Teil der Probenflüssigkeit (4'), welche sich in der Pipettenspitze (2) bzw. der Röhre (1) befindet, gebildet wird;
- Ansaugen bzw. Abgeben von Probenflüssigkeit (4) durch Erzeugung eines Drucks in der Röhre (1);
- Bestimmen eines zweiten Volumens der Probenflüssigkeit (4'), welche sich zu einem zweiten Zeitpunkt in der Pipettiervorrichtung befindet, in Abhängigkeit der Kapazität des Messkondensators umfassend die erste und zweite Elektrode (4', 5), wobei die zweite Elektrode (4') durch einen Teil der Probenflüssigkeit (4'), welche sich zum zweiten Zeitpunkt in der Pipettenspitze (2) bzw. der Röhre (1) befindet, gebildet wird;
- Bestimmen des zwischen dem ersten und dem zweiten Zeitpunkt bearbeiteten Flüssigkeitsvolumens, d.h. des ansaugten bzw. des abgegebenen Volumens der Probenflüssigkeit (4'), als Differenz zwischen dem ersten und dem zweiten Volumen.

17. Verwendung des Verfahrens nach Anspruch 16 zum Bestimmen von mindestens einem der folgenden Sachverhalte basierend auf einem zeitlichen Verlauf abhängig von der bestimmten Kapazität und einem zeitlichen Verlauf des erzeugten Drucks:
- ob die Öffnung der Pipettenspitze (3) zumindest teilweise verstopft ist;
- ob die Probenflüssigkeit (4') Gasblasen, insbesondere Luftblasen, enthält, insbesondere ob die angesaugte bzw. abgegebene Probenflüssigkeit (4') schaumig ist;
- ob zumindest teilweise Luft anstatt Probenflüssigkeit (4) angesaugt wurde.

18. Verwendung des Verfahrens nach Anspruch 16 zur Ermittlung in Abhängigkeit von der bestimmten Kapazität, ob ein intakter Luftspalt (8) zwischen einer Arbeitsflüssigkeit (7) und der Probenflüssigkeit (4') in der Röhre (1) vorliegt.

## Claims

1. Pipetting device comprising a tube (1), which has at one end an opening (3) for aspirating or dispensing a sample liquid (4), and which is operationally connectable at the other end to a pressure generating means, wherein a first electrode (5) is formed on the pipetting device which, together with a second electrode (4') forms a measuring capacitor, which is operationally connected to a measuring unit (9), which is designed to determine a volume of the aspirated or dispensed sample liquid (4) as a function of the capacitance of the measuring capacitor, **characterized in that** the second electrode (4') is formed by at least a part of the sample liquid (4') receivable in the tube (1).

2. Pipetting device according to claim 1 comprising an electrical contact (6), which is electrically insulated from the first electrode (5) and is formed such that during aspirating or dispensing of the sample liquid (4), an electrical connection can be established with the sample liquid (4), so that at least a part of the sample liquid (4') which is located in the tube (1) forms the second electrode (4') of the measuring capacitor, wherein the first electrode and the electrical contact for the second electrode (4') are electrically connected to the measuring unit (9).

3. Pipetting device according to claim 1 or 2, wherein the end having the opening (3) for aspirating or dispensing the sample liquid (4) is embodied as a pipette tip (2), wherein this is integrally formed with the tube (1) or is detachably connected to the tube (1), and wherein the pipette tip (2) in particular is tapered toward the opening (3) or has a conical shape.

4. Pipetting device according to any one of claims 1 to 3, wherein the first electrode (5) partially or completely envelops the tube (1), in particular the pipette tip (2).

5. Pipetting device according to any one of claims 1 to 4, wherein the first electrode (5) is formed by a wire, which is arranged along the tube (1) in the longitudinal direction, in particular in the region of the opening (3) or the pipette tip (2).

6. Pipetting device according to any one of claims 2 to 5, wherein the pipette tip (2) consists of a conductive material and forms the electrical contact (6), or alternatively consists of a nonconductive material, which is used as the dielectric material of the measuring capacitor.

7. Pipetting device according to any one of claims 2 to 6, wherein the electrical contact (6) is located at the opening (3) of the pipette tip (2).

8. Pipetting device according to any one of claims 2 to 6, wherein the electrical contact (6) can be established via a capacitive coupling via the sample liquid (4) which is located in a sample container (10), from which sample liquid (4) is aspirated or into which sample liquid (4) is dispensed.

9. Pipetting device according to any one of claims 2 to 8, wherein the electrical contact (6) is located on a channel wall of the tube (1), in particular it is formed by the channel wall, wherein the channel wall is at least partially coated with an electrically conductive material or consists of an electrically conductive material.

10. Pipetting device according to any one of claims 1 to 9, wherein the first electrode (5) is covered with an insulation, in particular an electrically insulating layer.

11. Liquid processing system comprising a pipetting device according to any one of claims 1 to 10 and a pressure generating means, wherein the pressure generating means is connected to a controller, which is designed to generate a pressure for the aspirating or dispensing of the sample liquid (4) in a closed control loop based on the volume of the aspirated or dispensed sample liquid (4') determined by the measuring unit (9) and a predefined target volume of the aspirated or dispensed sample liquid (4').

12. Liquid processing system according to claim 11, furthermore comprising a motorized transportation unit, for example, a robot arm, on which the pipetting device is arranged, wherein the controller is additionally designed for the purpose of transmitting signals to the transportation unit in order to move the pipette tip (2) of the pipetting device so that the opening (3) of the pipette tip (2) can be accurately positioned, in particular in a liquid container (10) filled with the sample liquid (4), for example, a sample tube (10) or a microplate.

13. Liquid processing system according to claim 11 or 12, wherein a fluid chamber which extends from the pressure generating means up into the tube (1) is filled with an operating liquid (7), which is at the reference potential, in particular is connected to ground.

14. Liquid processing system according to claim 13, wherein the first electrode (5) is at a reference potential, in particular is connected to ground.

15. Liquid processing system according to claim 11 or 12, wherein the second electrode (4') is at a reference potential, in particular the second electrode (4') is capacitively coupled to ground, for example, via the sample liquid (4), which is located in a sample container (10), from which sample liquid (4) is aspirated or into which sample liquid (4) is dispensed.

16. Method for determining a processed liquid volume during pipetting using a pipetting device according to any one of claims 1 to 10, comprising the following steps:
- determining a first volume of the sample liquid (4') which is located in the pipetting device as a function of the capacitance of the measuring capacitor comprising the first and second electrode (4', 5), wherein the second electrode (4') is formed by a part of the sample liquid (4') which is located in the pipette tip (2) and/or the tube (1);
- aspirating or dispensing sample liquid (4) by generating a pressure in the tube (1);
- determining a second volume of the sample liquid (4') which is located in the pipetting device at a second point in time as a function of the capacitance of the measuring capacitor comprising the first and second electrode (4', 5), wherein the second electrode (4') is formed by a part of the sample liquid (4') which is located at the second point in time in the pipette tip (2) and/or the tube (1);
- determining the liquid volume processed between the first and the second point in time, i.e., the aspirated or dispensed volume of the sample liquid (4'), as the difference between the first and the second volume.

17. Use of the method according to claim 16 for determining at least one of the following substantive matters based on a time curve in dependence on the determined capacitance and a time curve of the generated pressure:
- whether the opening of the pipette tip (3) is at least partially clogged;
- whether the sample liquid (4') contains gas bubbles, in particular air bubbles, in particular whether the aspirated or dispensed sample liquid (4') is foamy;
- whether air was at least partially aspirated instead of sample liquid (4).

18. Use of the method according to claim 16 for ascertaining as a function of the determined capacitance whether an intact air gap (8) is present between an operating liquid (7) and the sample liquid (4') in the tube (1) .

## Revendications

1. Dispositif de pipettage comprenant un tube (1) qui, à une extrémité, présente une ouverture (3) pour aspirer ou distribuer un liquide d'échantillon (4) et, à l'autre extrémité, peut être mis en liaison active avec un dispositif générateur de pression, une première électrode (5) étant formée sur le dispositif de pipettage, laquelle forme avec une deuxième électrode (4') un condensateur de mesure qui est en liaison active avec une unité de mesure (9), laquelle est conçue pour déterminer, en fonction de la capacité du condensateur de mesure, un volume du liquide d'échantillon (4) aspiré ou distribué, **caractérisé en ce que** la deuxième électrode (4') est formée par au moins une partie du liquide d'échantillon (4') pouvant être logé dans le tube (1).

2. Dispositif de pipettage selon la revendication 1 comprenant un contact électrique (6) qui est isolé électriquement de la première électrode (5) et qui est conçu de sorte que, lors de l'aspiration ou de la distribution du liquide d'échantillon (4), une liaison électrique peut être produite avec le liquide d'échantillon (4), de sorte qu'au moins une partie du liquide d'échantillon (4'), qui se trouve dans le tube (1), forme la deuxième électrode (4') du condensateur de mesure, la première électrode et le contact électrique pour la deuxième électrode (4') étant raccordés électriquement à l'unité de mesure (9).

3. Dispositif de pipettage selon la revendication 1 ou 2, dans lequel l'extrémité avec l'ouverture (3) pour aspirer ou distribuer le liquide d'échantillon (4) est réalisée sous la forme d'un embout de pipette (2), ce dernier étant formé d'un seul tenant avec le tube (1) ou étant raccordé de façon amovible au tube (1), et dans lequel l'embout de pipette (2) est effilé au niveau de l'ouverture (3) ou présente une forme conique.

4. Dispositif de pipettage selon l'une des revendications 1 à 3, dans lequel la première électrode (5) enveloppe partiellement ou complètement le tube (1), en particulier l'embout de pipette (2).

5. Dispositif de pipettage selon l'une des revendications 1 à 4, dans lequel la première électrode (5) est formée par un fil qui est agencé dans le sens longitudinal le long du tube (1), en particulier dans la zone de l'ouverture (3) ou de l'embout de pipette (2).

6. Dispositif de pipettage selon l'une des revendications 2 à 5, dans lequel l'embout de pipette (2) est composé d'un matériau conducteur et forme le contact électrique (6), ou en variante est composé d'un matériau non conducteur qui sert de diélectrique du condensateur de mesure.

7. Dispositif de pipettage selon l'une des revendications 2 à 6, dans lequel le contact électrique (6) se trouve au niveau de l'ouverture (3) de l'embout de pipette (2).

8. Dispositif de pipettage selon l'une des revendications 2 à 6, dans lequel le contact électrique (6) peut être établi par le biais d'un couplage capacitif via le liquide d'échantillon (4) qui se trouve dans un récipient d'échantillon (10), qui est aspiré du liquide d'échantillon (4) ou qui est distribué dans le liquide d'échantillon (4).

9. Dispositif de pipettage selon l'une des revendications 2 à 8, dans lequel le contact électrique (6) se trouve au niveau d'une paroi de canal du tube (1), dans lequel il est en particulier formé par la paroi de canal, la paroi de canal étant recouverte au moins en partie d'un matériau électriquement conducteur ou étant constituée d'un matériau électriquement conducteur.

10. Dispositif de pipettage selon l'une des revendications 1 à 9, dans lequel la première électrode (5) est recouverte d'une isolation, en particulier d'une couche électriquement isolante.

11. Système de traitement de liquide comprenant un dispositif de pipettage selon l'une des revendications 1 à 10 et un dispositif générateur de pression, dans lequel le dispositif générateur de pression est raccordé à un régulateur qui est conçu pour, dans un circuit de régulation fermé, sur la base du volume du liquide d'échantillon (4') aspiré ou distribué déterminé par l'unité de mesure (9) ainsi que sur la base d'un volume cible défini du liquide d'échantillon (4') aspiré ou distribué, produire une pression pour l'aspiration ou la distribution du liquide d'échantillon (4).

12. Système de traitement de liquide selon la revendication 11, comprenant en outre une unité de transport motorisée, comme par exemple un bras de robot sur lequel est agencé le dispositif de pipettage, dans lequel le régulateur est en outre conçu pour envoyer des signaux à l'unité de transport pour déplacer l'embout de pipette (2) du dispositif de pipettage de façon à ce que l'ouverture (3) de l'embout de pipette (2) puisse être positionnée de façon précise, en particulier dans un récipient de liquide (10) rempli du liquide d'échantillon (4), comme par exemple un tube à essai (10) ou une microplaque.

13. Système de traitement de liquide selon la revendication 11 ou 12, dans lequel un espace fluidique qui s'étend depuis le dispositif générateur de pression jusque dans le tube (1) est rempli d'un liquide de travail (7) qui est sur le potentiel de référence, qui est en particulier relié à la masse.

14. Système de traitement de liquide selon la revendication 13, dans lequel la première électrode (5) se situe sur un potentiel de référence, et est en particulier reliée à la masse.

15. Système de traitement de liquide selon la revendication 11 ou 12, dans lequel la deuxième électrode (4') est située sur un potentiel de référence, la deuxième électrode (4') étant en particulier couplée à la masse de façon capacitive, par exemple via le liquide d'échantillon (4) qui se trouve dans un récipient d'échantillon (10), qui est aspiré du liquide d'échantillon (4) ou qui est distribué dans le liquide d'échantillon (4).

16. Procédé pour déterminer un volume de liquide traité lors du pipettage avec un dispositif de pipettage selon l'une des revendications 1 à 10 comprenant les étapes consistant à :
- déterminer un premier volume du liquide d'échantillon (4') qui se trouve dans le dispositif de pipettage en fonction de la capacité du condensateur de mesure comprenant la première et la deuxième électrode (4', 5), dans lequel la deuxième électrode (4') est formée par une partie du liquide d'échantillon (4') qui se trouve dans l'embout de pipette (2) ou dans le tube (1) ;
- aspirer ou distribuer le liquide d'échantillon (4) en générant une pression dans le tube (1) ;
- déterminer un deuxième volume du liquide d'échantillon (4') qui se trouve à un deuxième moment dans le dispositif de pipettage, en fonction de la capacité du condensateur de mesure comprenant la première et la deuxième électrode (4', 5), dans lequel la deuxième électrode (4') est formée par une partie du liquide d'échantillon (4') qui se trouve au deuxième moment dans l'embout de pipette (2) ou dans le tube (1) ;
- déterminer le volume de liquide qui a été traité entre le premier et le deuxième moment, c'est-à-dire le volume aspiré ou distribué du liquide d'échantillon (4'), sous la forme d'une différence entre le premier et le deuxième volume.

17. Utilisation du procédé selon la revendication 16 pour déterminer au moins l'une des circonstances suivantes sur la base d'un tracé temporel en fonction de la capacité déterminée et d'un tracé temporel de la pression produite :
- savoir si l'ouverture de l'embout de pipette (3) est au moins partiellement obstruée ;
- savoir si le liquide d'échantillon (4') contient des bulles de gaz, en particulier des bulles d'air, en particulier si le liquide d'échantillon (4') aspiré ou distribué est mousseux ;
- savoir s'il a été aspiré au moins partiellement de l'air au lieu du liquide d'échantillon (4).

18. Utilisation du procédé selon la revendication 16 pour déterminer en fonction de la capacité déterminée, s'il y a un entrefer intact (8) entre un liquide de travail (7) et le liquide d'échantillon (4') dans le tube (1).
